Europäisches Patentamt

European Patent Office

Office européen des brevets

(19)

(11) Publication number: **0 143 781**
**B1**

# EUROPEAN PATENT SPECIFICATION

(12)

(45) Date of publication of patent specification: **19.04.89**

(21) Application number: **83902582.2**

(22) Date of filing: **20.05.83**

(86) International application number:
**PCT/US83/00802**

(87) International publication number:
**WO 84/04714 06.12.84 Gazette 84/28**

(51) Int. Cl.⁴: **B 23 B 1/00,** B 23 B 27/10,
B 23 B 27/12

(54) **METHOD OF EXTENDING WEAR LIFE OF NON-OXIDE CERAMIC BODIES AT HIGH TEMPERATURES.**

(43) Date of publication of application:
**12.06.85 Bulletin 85/24**

(45) Publication of the grant of the patent:
**19.04.89 Bulletin 89/16**

(84) Designated Contracting States:
**DE FR GB NL SE**

(56) References cited:
**GB-A- 827 364**
**JP-A-31 000 910**
**US-A-1 718 293**
**US-A-3 141 378**
**US-A-3 347 604**
**US-A-3 705 457**
**US-A-3 990 332**
**US-A-4 179 486**
**US-A-4 227 842**
**US-A-4 264 548**
**US-A-4 280 973**
**US-A-4 286 905**
**US-A-4 323 325**
**US-A-4 351 787**
**US-A-4 352 308**

(73) Proprietor: **Ford Motor Company**
**The American Road**
**Dearborn, MI 48121 (US)**
(84) **NL SE**

(73) Proprietor: **FORD MOTOR COMPANY LIMITED**
**Eagle Way**
**Brentwood Essex CM13 3BW (GB)**
(84) **GB**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **TENNENHOUSE, Gerald, J.**
**21380 Concord**
**Southfield, MI 48076 (US)**
Inventor: **RUNKLE, Franklin, D.**
**24756 Kings Point Drive**
**Novi, MI 48050 (US)**

Courier Press, Leamington Spa, England.

(56) References cited:
IBM TECHNICAL DISCLOSURE BULLETIN, vol. 15, no. 6, November 1972, page 2004, Armonk, N.Y., US; E. BIEDERMANN et al.: "Turning with diamonds in a protective gas atmosphere" "MACHINING TITANIUM WITH COOLANTS" American Machinist 24 May 1954 Pg. 155

(74) Representative: **Messulam, Alec Moses et al**
**A. Messulam & Co. 24 Broadway**
**Leigh on Sea Essex SS9 1BN (GB)**

## Description

The invention relates to a method of machining a metal with a substantially dense non-oxide ceramic tool.

High temperatures are experienced at a wear interface when a non-oxide ceramic, such as a metal carbide or metal nitride, is used (a) to cut metals in air at high speeds greater than 122 surface metre per minute (400 surface feet per minute), or under rigorous loading, or (b) to rub against a hot, hard metal surface in a bearing or piston/cylinder application. At these high interface temperatures (above 750°C), the metal will form an oxide in the presence of air or similar oxidizing agent. The oxide causes a welding between the ceramic and metal and substantially reduces the wear life of the ceramic.

It is interesting to note that such oxides have proven to be a help to iron based tool materials, such as high speed tool steels, because the oxide prevents welding at the interface, the opposite of the phenomenon with non-oxide ceramics. But, for non-oxide ceramics, the oxide formation remains a problem. An attempt by the prior art to reduce the interface temperature by quenching with oil or other cooling medium has resulted in cracking of the ceramic tool, the latter being highly sensitive to thermal shock.

An attempt has been made to modify the cutting conditions surrounding the cutting of tough alloys (such as nickel and cobalt based super alloys or work hardenable stainless steel) with oxide or non-oxide ceramic cutting tools. In U.S. patent 3,990,332 the cutting tool was surrounded or bathed in a stream of oxygen to promote the formation of an oxide that reduces the formation of a notch at the depth of cut line where the thermal gradient changes abruptly. No disclosure is made of the effect of oxygen on the total wear of the tool.

Tungsten carbide and titanium carbide based tool bits have been used during the past 10—15 years for the machining of steel and iron and are considered conventional. Only recently have tool bits been made of hot pressed silicon nitride, and only recently have they been shown to have exceptionally good properties for the machining of gray cast iron under certain conditions (see U.S. patent 4,323,325). These $Si_3N_4$ tool bits have demonsrated long life and can be used at higher speeds than tool bits made of more conventional materials. However, one attempt by the prior art to machine a metal other than cast iron, namely aluminum, with a spinel modified $Si_3N_4$ tool bit, demonstrated relatively poor results (see Japanese patent 49-113803). The strength, hardness, thermal conductivity, and thermal shock resistance would suggest to one experienced in the field that $Si_3N_4$ should be a superior tool material when used against a wide range of workpiece materials. The art, not understanding the wear problem of such non-oxide ceramics, turned to other types of ceramic based materials (such as aluminum oxide) in order to be able to achieve some degree of success with respect to machining steel (see U.S. patent 4,286,905).

It would be very useful if cutting conditions could be found which would allow metals such as steel to be machined with or interface with non-oxide ceramics at high temperatures; and, more particularly, it would be useful if cutting conditions could be found which would allow metals to be machined with a silicon nitride based tool bit, while retaining the superior properties $Si_3N_4$ exhibits against gray cast iron.

An article entitled "Machining Titanium" with Coolants: in American Machinist discloses tungsten carbide material for tools and the use of inert gas blanket surrounding the work tool area and high pressure jets directing cutting fluid close to the work tool interface.

According to the invention there is provided a method of machining a metal with a substantially dense non-oxide ceramic cutting tool, said metal being of the type that forms a metal oxide containing compound on the cutting surface of the tool under heated conditions prevailing at the cutting tool interface with said metal, the method comprising removing oxygen from the interface between the cutting tool and metal characterised in that the cutting tool, which is substantially constituted of $Si_3N_4$ is moved relatively against said metal at a relative speed of at least 122 surface metre per minute (400 surface feet per minute) under a loading and for a period of time effective to attain a temperature of at least 750°C at a substantial number of micro loci across the cutting tool interface.

Preferably, the removal of oxygen is carried out by the use of a directed stream of inert atmosphere at the interface, the stream reducing the presence of oxygen at the interface by at least 60%. Advantageously, the inert atmosphere is comprised of a flow of relatively pure nitrogen gas.

The metal is preferably selected from the group consisting of iron based metals or alloys, aluminum, zinc, titanium, and super alloys.

Advantageously, the cutting tool itself is the fabricated product of heat fusing a powder mixture of silicon nitride and a controlled proportion of oxygen carrying agents, preferably in crystalline form. The agents are added either to silicon prior to nitriding or subsequent thereto, but before fusion. For example, mixture may advantageously contain .2—1.0% $Al_2O_3$ and 2—14% oxynitrides (which may be added directly to $Si_3N_4$ powder or to silicon powder which is then subjected to a nitriding operation), or may contain yttrium oxide added in an amount of 4—12% to the silicon powder or $Si_3N_4$ and then subjected to a heating treatment to form the oxynitrides.

Preferably, the loading (pressing of the tool against the metal) for the cutting step is carried out in a range of $1.72 \times 10^5$—$3.58 \times 10^5$ (25,000—52,000 psi) and the density of the cutting tool is preferably at least 98% of full theoretical.

A preferred method for carrying out the invention herein is as follows.

An $Si_3N_4$ based cutting tool is fabricated and moved relatively against a metal in a cutting or shearing manner. The metal is of the type that forms a metal oxide containing compound on the cutting surface of the $Si_3N_4$ cutting tool under the heated conditions prevailing at the cutting tool interface with the metal. The compound typically forms as a liquid at the high interface temperatures, but the liquid species can be a solid solution, an oxynitride, or silicate. The cutting tool is moved at a relative speed of at least 122 surface metre per minute (400 surface feet per minute) under a loading and for a period of time effective to attain a cutting tool temperature of at least 750°C. While carrying out the cutting operation, oxygen is removed from the interface between the cutting tool and metal.

Fabricating tool

The $Si_3N_4$ based cutting tool may be fabricated by a method described in U.S. patent 4,323,325. In such disclosure, a powder mixture of silicon nitride is mixed with oxygen carrying agents (preferably 2—14% by weight silicon oxynitride, .2—1.0% by weight aluminum oxide) and either hot pressed or nitrided to form a heat fused product having sufficient density of at least 98% of full theoretical or 3.2—3.3 gm/cm³. Such process may be modified by adding the oxygen carrying agents (preferably 4—12% $Y_2O_3$ and .2—1.0% $Al_2O_3$) to raw silicon metal powder and the mixture nitrided, after cold compaction, to form the oxynitride crystallites prior to hot pressing and/or eventual sintering.

Metal to be cut

The metal to be cut in accordance with this invention is of the type that forms a metal oxide containing compound on the cutting surface of the tool. Such metals preferably are selected from the group consisting essentially of iron based metals or alloys, aluminum, zinc, titanium, and super alloys. The super alloys are best represented by nickel or cobalt based alloys (which can be wrought, cast, or isostatically pressed); they are characterized by their high strength at elevated temperatures. Their compositions include a major amount of nickel or cobalt with significant amounts of alloying elements. One example is 28% Co, 25% Cr, 25% Fe, 5% Ti, 7% Mo, 6% W, 2% tantalum plus niobium, and 2% other alloying ingredients.

Removing oxygen

Non-oxide ceramics, when subjected to high temperature wear, are not helped by the presence of an oxide that may be formed during hot cutting tool operation against a metal that facilitates the formation of an oxide. As the cutting tool is pressed against the metal at pressures of $1.72 \times 10^5$—$3.58 \times 10^5$ kPa (25,000—52,000 psi) and at surface speeds of at least 122 surface meter per minute (400 surface feet per minute), the surface will get hot and achieve a temperature of at least 750°C. The metal may melt at the interface and form a liquid such as iron oxide due to the presence of oxygen in the atmosphere surrounding the cutting operation and the presence of iron. The metal may also melt at micro loci; that is, a number of minute high points at the interface surface, due to the high temperature experienced by these points as a result of friction. The bulk temperature of the metal may not reach oxide promoting temperature, but the micro loci do.

Thus, the oxide is formed in separated amounts as the micro loci spread across the interface; this may occur with cast iron particularly. Even though $Si_3N_4$ machine cuts gray cast iron with effectiveness, the use of exclusion of oxygen can add additional improvements due to the possibility of micro loci oxide formation.

It is important that at least one of the oxygen or the metal that forms the oxide be eliminated from the interface so that such metal oxide does not form, and thus facilitate increased wear.

Removal is preferably carried out by directing a flowing stream of inert gas, preferably nitrogen, at the interface during cutting. The stream should be directed to reduce the presence of oxygen at the interface by at least 60% and optimally 100%.

The invention is applicable generally to high temperature wear of non-oxide ceramics, which may include bearings in a ceramic engine component, or a piston and cylinder engine application where one of the members carries a non-oxide ceramic. The wear life of the ceramic in these applications can be considerably extended by use of this invention.

Examples

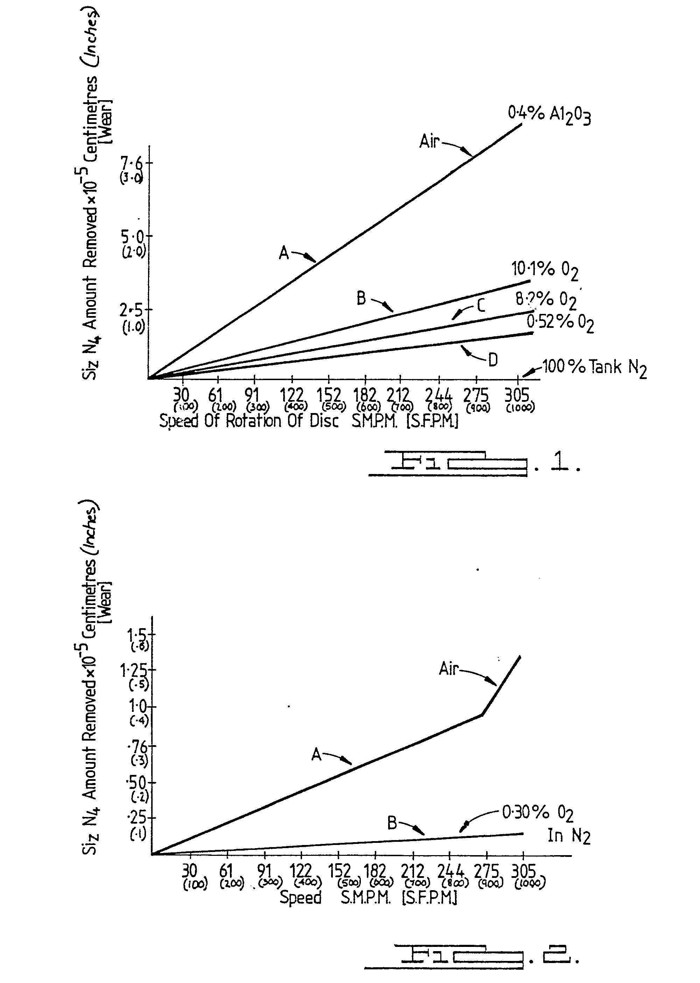

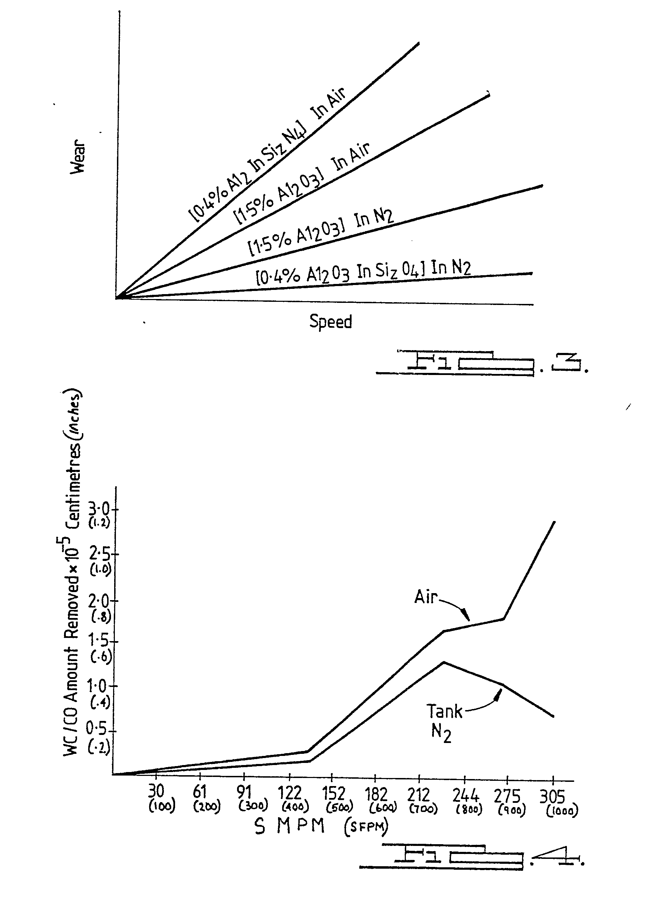

A series of experiments were performed to stimulate extended machine cutting conditions by use of a standardized pin and disc test. This test eliminates the time consuming necessity for removal of large amounts of metal to determine if a tool wears. In this test, the chemical aspect is isolated; the test correlates well with actual machining tests. $Si_3N_4$ (containing 8% $Y_2O_3$ and 1% $Al_2O_3$ in a powder mixture prior to hot pressing) was hot pressed into pins according to the fabrication technique discussed above. Pins were then placed in a modified lubrication testing apparatus and moved into contact with a rotating disc or plate of metal (which normally would be cut in a machining operation). The pins were pressed at loads of up to 18 Kg (5000 psi). The pins were pressed against metal plates for about one minute, the discs rotating at about 305 surface meter per minute (1000 surface ft. per minute). The loads were estimated to vary between $2.07 \times 10^5$—$3.44 \times 10^5$ kPa (30,000 psi and 50,000 psi), and pin pressing was carried out under ambient conditions (in air). The metal plates were comprised of 1045 steel or gray cast iron. The steel had a composition of .46% C, .75% Mn, .04% P, .65% S, and the remainder Fe. The steel had a tensile strength of $6.76 \times 10^5$ kPa (98,000 psi), a hardness of 94 $R_c$ "B" or 191/205 Brinell. The gray cast iron had a composition of .07% Sn, .069% S, .7% Mn, 2.16% Si, 3.19% C, and the balance Fe. The gray cast iron had a tensile strength of $2.34 \times 10^5$ kPa (34,000 psi) and a hardness of 94 $R_c$ "B" or 205/216 Brinell. The test was run to deeply cut the plates in such a manner that the material of the plates would be transferred to the surface of the $Si_3N_4$. When the metal disc was constituted of 1045 steel, the $Si_3N_4$ pins were badly worn (see Plot A of Figure 1). When the metal was constituted of gray cast iron, little wear was detected (see Plot A of Figure 2).

The material transferred to the surface of the $Si_3N_4$ pins was found to be rich in iron and manganese, regardless of whether the metal was gray cast iron or 1045 steel. Manganese was found in both cast iron and steel in concentrations less than 1%. The temperature of the $Si_3N_4$ pin when working against steel was found to be approximately 800—1200°C, while the temperature of the pin when working against cast iron was estimated to be about 600—900°C.

In order to investigate the reaction of iron, manganese, and $Si_3N_4$, powders of these respective materials were pressed into pellets and heated in air at different temperatures over the range of 600—1250°C. The course of the reactions was followed by x-ray diffraction. At temperatures of 600—800°C, the iron and manganese each were converted to iron oxide and manganous oxide, respectively, with traces of $SiO_2$ forming above 800°C. At temperatures above 900°C, the $Mn_2O_3$ concentration decreased with the formation of increasing quantities of $SiO_2$ and the formation of $MnSiN_2$. This chemical change was accompanied by gross melting of the samples at 900—1000°C. This is a significant factor contributing to the wear of $Si_3N_4$ based cutting tools against steel.

Since it is not practical to eliminate manganese from steel, $Si_3N_4$ tool performance was improved by removing oxygen from the system. Pins made of hot pressed $Si_3N_4$ were again pressed against plates of 1045 steel and gray cast iron, rotating at a speed of 305 surface metre per minute (1000 surface feet per minute) in the manner previously described, with one notable exception; the experiment was carried out in an atmosphere of flowing nitrogen. This atmosphere was created by directing a flow of nitrogen gas about the interface. Different rates of flow and different flow directions resulted in varying degrees of oxygen exclusion or presence. Little or no deterioration was found on the pin tested under nitrogen flows against either of the plates (see Plots B—C—D of Figure 1 and Plot B of Figure 2). Noticeable deterioration was found on the pin tested under similar conditions in air against steel and some measurable wear in air against cast iron.

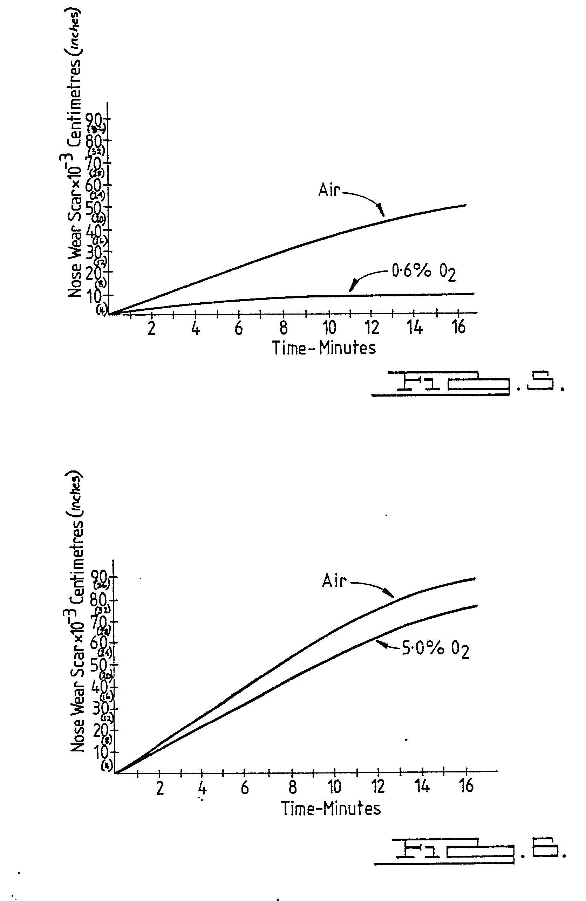

With the $Si_3N_4$ based tool material, the presence of $Al_2O_3$ in the material affects the degree of wear improvement. As shown in Figure 3, pin on disc tests were performed using $Si_3N_4$ materials of varying $Al_2O_3$ content and under both air and $N_2$ atmospheres. Decreasing amounts of $Al_2O_3$ from 1.5 down to .4% by weight of the $Si_3N_4$ reduced wear in nitrogen. However, the presence of increasing amounts of $Al_2O_3$ from .4 to 1.5% reduced wear in air. The $Al_2O_3$ is a glass former in the making of $Si_3N_4$ and does assist hot pressing or sintering. However, the amount of $AlO_3$ must be strictly controlled if the $Si_3N_4$ tool is to have extended wear life at high temperatures. Working at higher temperatures, the presence of the glass accelerates wear.

Other non-oxide ceramic materials, such as tungsten carbide, were also tested with the pin on disc test in the presence of a nitrogen flow, thereby excluding oxygen from the interface. The WC pin showed increased life (see Figure 4), but not as remarkable as the increase in life with $Si_3N_4$ based pins, the latter being on the order of a factor of 3.

A series of actual machining tests were undertaken which corroborated the pin and disc simulation tests. Cutting tools were fabricated of $Si_3N_4$ (from a mixture of 8% $Y_2O_3$ and 1% $Al_2O_3$) and were used in a lathe machining operation agaist cast iron or 1045 steel with a tool speed varying up to 462 surface metre per minute (1500 surface feet per minute), total depth of cut of .15 cm (.06 inches), and a feed rate of about .028 cm (.011 inch) revolution. A significant difference in wear was experienced between machining in air and a reduced oxygen atmosphere (.6% or 5.0% $O_2$ remaining), see Figures 7 and 8. Air normally contains about 21% $O_2$.

## Claims

1. A method of machining a metal with a substantially dense non-oxide ceramic cutting tool substantially constituted of $Si_3N_4$, said metal being of the type that forms a metal oxide containing compound on the cutting surface of the tool under heated conditions prevailing at the cutting tool interface with said metal, the method comprising removing oxygen from the interface between the cutting tool and metal moving the tool relatively against said metal at a relative speed of at least 122 surface metre per minute (400 surface feet per minute) under a loading and for a period of time effective to attain a temperature of at least 750°C at a substantial number of micro loci across the cutting tool interface.

2. A method as claimed in Claim 1, in which said removal of oxygen is carried out by the use of a directed stream of inert atmosphere at said interface.

3. A method as claimed in Claim 2, in which said inert atmosphere is a flow of relatively pure nitrogen gas.

4. A method as claimed in any one of Claims 1 to 3, in which said relative movement is carried out by use of a loading in the range of $1.72 \times 10^5$—$3.58 \times 10^6$ kPa (25,000—52,000 psi).

5. A method as claimed in any one of the preceding claims in which the cutting tool has a density of at least 98% of full theoretical.

6. A method as claimed in any one of the preceding claims, in which said metal is selected from the group consisting of iron based metals or alloys, aluminum, zinc, titanium, and super alloys.

7. A method as claimed in any one of the preceding claims, in which said cutting tool is the result of heat fusing a powder mixture of silicon nitride and oxygen carrying agents, said agents being added either to silicon prior to nitriding or subsequent thereto, but before fusion.

8. A method as claimed in Claim 7, in which said powder mixture comprises .2—1.0% by weight Al₂O₃.

9. A method as claimed in Claim 7, in which said silicon nitride mixture is comprised of 2—14% by weight oxynitrides and .2—1.0% Al₂O₃.

10. A method as claimed in Claim 7, in which said mixture is formed by adding 4—12% Y₂O₃ to silicon and heating to form a mixture containing oxynitrides.

## Patentansprüche

1. Verfahren zur maschinellen Bearbeitung eines Metalls mit einem im wesentlichen dichten nichtoxidischen, im wesentlichen aus $Si_3N_4$ bestehenden Keramikschneidewerkzeug, wobei besagtes Metall derart beschaffen ist, daß es unter den in der Schneidewerkzeuggrenzfläche mit besagtem Metall herrschenden Hitzebedingungen eine metalloxidhaltige Verbindung auf der Schneidefläche des Werkzeuges bildet, wobei das Verfahren darin besteht, daß man Sauerstoff aus der Grenzfläche zwischen dem Schneidewerkzeug und dem Metall entfernt, und das Werkzeug relativ gegen besagtes Metall mit einer Relativgeschwindigkeit von wenigstens 122 Oberflächenmetern pro Minute (400 Oberflächenfuß pro Minute) bewegt, unter einer Belastung und für eine wirksame Zeitspanne, um an einer erheblichen Anzahl von Mikroerhebungen über die Schneidewerkzeuggrenzfläche hinweg eine Temperatur von wenigstens 750°C zu erreichen.

2. Verfahren nach Anspruch 1, worin besagte Sauerstoffentfernung durch den Einsatz eines gerichteten Stromes einer inerten Atmosphäre an besagter Grenzfläche erfolgt.

3. Verfahren nach Anspruch 2, worin besagte inerte Atmosphäre ein Gasstrom verhältnismäßig reinen Stickstoffes ist.

4. Verfahren nach einem der Ansprüche 1 bis 3, worin besagte Relativbewegung durch den Einsatz einer Belastung im Bereich von $1,72 \times 10^5$—$3,85 \times 10^5$ kPa (25000—52000 Psi) erfolgt.

5. Verfahren nach einem der vorhergehenden Ansprüche, worin das Schneidewerkzeug eine Dichte von wenigstens 98% der vollen theoretischen Dichte aufweist.

6. Verfahren nach einem der vorhergehenden Ansprüche, worin besagtes Metall aus der eisenhaltige Metalle oder Legierungen, Aluminium, Zink, Titan und Superlegierungen umfassenden Gruppe ausgewählt ist.

7. Verfahren nach einem der vorhergehenden Ansprüche worin besagtes Schneidewerkzeug das Ergebnis der Heißverschmelzung eines Pulvergemisches aus Siliziumnitrid und sauerstofftragenden Mitteln ist, wobei diese Mittel dem Silizium entweder vor der Nitrierung oder im Anschluß daran, allerdings vor der Veschmelzung, zugegeben werden.

8. Verfahren nach Anspruch 7, worin besagtes Pulvergemisch aus 0,2—1 Gewichtsprozent Al₂O₃ besteht.

9. Verfahren nach Anspruch 7, worin besagtes Siliziumnitridgemisch 2—14 Gewichtsprozent Oxynitride und 0,2—1 Gewichtsprozent Al₂O₃ enthält.

10. Verfahren nach Anspruch 7, worin besagtes Gemisch durch Zugabe von 4—12 Gewichtsprozent Y₂O₃ zu Silizium und durch Erhitzung zur Bildung eines Oxynitride enthaltenden Gemisches gebildet wird.

## Revendications

1. Procédé d'usinage d'un métal avec un outil de coupe en céramique sans oxyde très dense constitué principalement de $Si_3N_4$, ce métal étant du type qui forme un composé contenant un oxyde métallique sur la surface de coupe de l'outil dans les conditions de chauffage prédominant au niveau de l'interface de l'outil de coupe avec ledit métal, procédé dans lequel on élimine l'oxygène de l'interface entre l'outil de coupe et le métal, on déplace l'outil par rapport audit métal contre celui-ci à une vitesse relative d'au moins 122 mètres en surface par minute (400 pieds en surface par minute) sous une charge et pendant une période de temps efficace pour atteindre une température d'au moins 750°C en un nombre important de zones microscopiques sur l'interface de coupe de l'outil.

2. Procédé selon la revendication 1, dans lequel l'élimination de l'oxygène est effectuée en utilisant un courant d'une atmosphère inerte dirigé sur ladite interface.

3. Procédé selon la revendication 2, dans lequel ladite atmosphère inerte consiste en un courant d'azote gazeux relativement pur.

4. Procédé selon l'une quelconque des revendications 1 à 3, dans lequel le mouvement relatif est effectué en utilisant une charge de $1,72 \times 10^5$ à $3,58 \times 10^5$ kPa.

5. Procédé selon l'une quelconque des revendications précédentes, dans lequel l'outil de coupe a une densité correspondant à 98% de la valeur théorique maximum.

6. Procédé selon l'une quelconque des revendications précédentes dans lequel ledit métal est choisi parmi les métaux et les alliages de fer, l'aluminium, le zinc, le titane ainsi que les superalliages.

7. Procédé selon l'une quelconque des revendications précédentes, dans lequel ledit outil de coupe est obtenu par fusion à chaud d'un mélange pulvérulent de nitrure de silicium et d'agents porteurs d'oxygène, ces agents étant ajoutés dans le silicium avant la nitruration ou après celle-ci, mais avant la fusion.

8. Procédé selon la revendication 7, dans lequel le mélange pulvérulent comprend de 0,2 à 1,0% en poids de Al₂O₃.

9. Procédé selon la revendication 7, dans lequel le mélange à base de nitrure de silicium comprend de 2 à 14% en poids d'oxynitrures et de 0,2 à 1,0% de $Al_2O_3$.

10. Procédé selon la revendication 7, dans lequel ledit mélange est formé en ajoutant de 4 à 12% de $Y_2O_3$ dans le silicium et on chauffe pour former un mélange contenant des oxynitrures.

Fig. 1.

Fig. 2.

Wear

[0.4% A12 In Si2 N4] In Air

[1.5% A12O3] In Air

[1.5% A12O3] In N2

[0.4% A12O3 In Si2 O4] In N2

Speed

Fig. 3.

WC/CO Amount Removed × 10^{-5} Centimetres (inches)

3.0 (1.2)

2.5 (1.0)

2.0 (.8)

1.5 (.6)

1.0 (.4)

0.5 (.2)

Air

Tank N2

30 (100) | 61 (200) | 91 (300) | 122 (400) | 152 (500) | 182 (600) | 212 (700) | 244 (800) | 275 (900) | 305 (1000)

S M P M (SFPM)

Fig. 4.

FIG. 5.

FIG. 6.